# EUROPEAN PATENT SPECIFICATION

(11) **EP 0 874 218 B1**
(45) Date of publication and mention of the grant of the patent: **10.04.2002**
(21) Application number: 98201853.3
(22) Date of filing: 23.12.1994
(51) Int. Cl.: G01C 1/04, G01C 15/00, G01S 17/02

(54) **Surveying instrument**
Geodätisches Instrument
Instrument d'arpentage

(30) Priority: 28.12.1993 JP 34973393
(43) Date of publication of application: 28.10.1998
(62) Divisional of application: 94309749.3
(73) Proprietor: KABUSHIKI KAISHA TOPCON, Tokyo-to (JP)
(72) Inventor: Sasaki, Tsuneo, Deceased (JP); Ohtomo, Fumio, Itabashi-ku, Tokyo-to (JP)
(74) Representative: Maggs, Michael Norman

(56) References cited:
- WO-A-90/12284
- GB-A- 2 018 422
- GB-A- 2 231 222
- US-A- 5 216 480
- PATENT ABSTRACTS OF JAPAN vol. 14, no. 207 (P-1043), 26 April 1990 & JP 02 045711 A (NTT), 15 February 1990

## Description

The present invention relates to a surveying instrument, and in particular to a surveying instrument by which it is possible accurately and easily to align the centre of a target with the optical axis of a telescope of the instrument.

When measuring distances or angles, the optical axis of the surveying instrument telescope must be aligned with the centre of the target. Both distance measurements and vertical or horizontal angle measurements may be affected by the accuracy of the alignment.

In a conventional surveying instrument, when the optical axis of the telescope is to be aligned with the centre of a target, a surveyor first uses the telescope to collimate, then adjusts the vertical angle adjusting mechanism of the telescope and the horizontal direction adjusting mechanism of the telescope using the telescope adjustment mechanisms in order to align a reticle of the telescope with the target to be measured. At a position where the surveyor judges that these are aligned with each other, the distance and angle are electronically read out, and the value is displayed on a display unit.

In the conventional method as described above, accuracy varies according to differences between individual surveyors. Even when measurements are by the same surveyor, there may be variations in alignment accuracy due to survey adjustments. Furthermore, when the target is a long distance away, it is often difficult accurately to identify the centre of the target. When adjusting the vertical angle adjusting mechanism, and the horizontal direction adjusting mechanism, it is necessary to lock and unlock a locking device, and repeatedly to perform fine adjustment; this leads to complicated procedures and requires much time.

It is an object of the present invention to provide a surveying instrument in which it is possible automatically to align the optical axis of a telescope with the centre of the target in order to eliminate individual differences between surveyors. It is a further object to simplify the alignment procedure and to reduce the time required.

United States patent US-A-5216480, which is considered to represent the closest prior art, discloses those features set out in the pre-characterising portion of claim 1. Other systems are disclosed in GB-A-2018422 and GB-A-2231222.

According to the present invention, a survey instrument is characterised by those features set out in the characterising portion of claim 1.

The telescope is mounted for rotation about a vertical or horizontal axis or both. This may be achieved by mounting it centrally of a vertical shaft and a horizontal shaft, for example by way of a trunnion bearing.

User-notification means may be arranged to alert a user of the instrument when the horizontal angle and the vertical angle of the centre of the target are obtained. Similar or the same user-identification means may be provided to alert a user of the instrument when the optical axis of the telescope is aligned with the centre of the target. Such user-notification means may comprise an audible or visual alarm.

The invention may be carried into practice in a number of ways, and one specific embodiment will now be described, by way of example, with reference to the accompanying drawings, in which:
Figure 1 illustrates schematically a preferred embodiment of the present invention;
Figure 2 shows operation of the embodiment of Figure 1;
Figure 3 shows the relationship between the deviation of a solid state image sensor and an angle corresponding to the deviation; and
Figure 4 is a block diagram of the preferred embodiment of Figure 1.

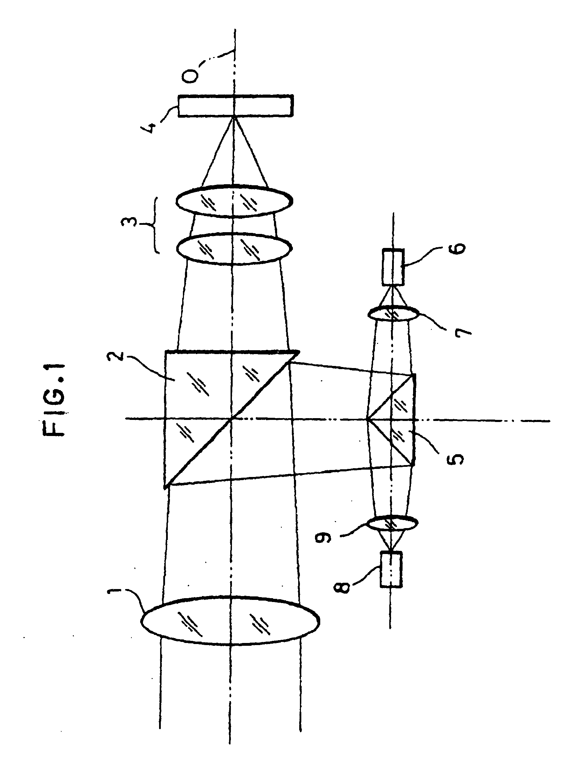

Figure 1 shows the main parts of the preferred embodiment of the invention, in which an objective lens 1, a dichroic mirror 2 for almost complete reflection of infra-red light, a condenser lens 3 and a solid state image sensor 4, such as a CCD are arranged along an optical axis O of a telescope. A triangular-shaped mirror 5 is arranged in the position shown and in which it faces the dichroic mirror 2. In parallel with the optical axis O of the telescope, and with the triangular mirror 5 at the centre, there is a further group of devices comprising an emitter 6 for emitting flashes of modulated light (for example near infra-red light) and a condenser lens 7 on one side of the mirrors and a light receiving element 8 and a further condenser lens 9 on the other.

Operation of the embodiment of Figure 1 will now be described.

Light emitted from the emitter 6 is reflected onto the triangular mirror 5 and the dichroic mirror 2. After passing through the objective lens 1, the beam is directed to a target prism (not shown). After reflection from the target prism, the returning light passes along the same route back to the dichroic mirror 2, from where it is reflected to the triangular mirror 5 and through the condenser lens 9 to be focused onto the light receiving element 8. Part of the returning light is transmitted through the dichroic mirror 2, and after passing through the condenser lens 3 it is projected onto the solid state image sensor 4.

From the phase difference between the outgoing or emitted light, and the incoming or returning light, the distance is determined.

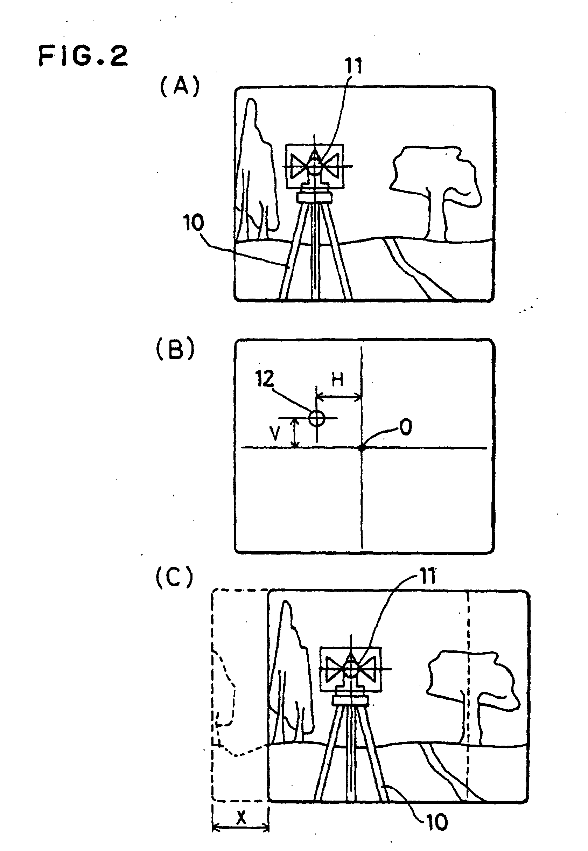

Visible light returning through the objective lens 1 passes through the dichroic mirror and is condensed by the condenser lens 3 and imaged onto the solid state image sensor 4. The image is then displayed on a display unit such as a liquid crystal monitor, a CRT, or any other suitable device, as shown in Figure 2.

Figure 2(A) shows a target prism 11 on a tripod 10, along with the surroundings. When the emitter 6 is emitting light, an image of the returning light from the target prism is formed in addition to, and overlapping, that of the visible light. Accordingly, if the differences are obtained between the image when the emitter 6 is turned on and the image when it is turned off, an image formed only by the reflected/returning light 12 is obtained. As shown in Figure 2(B) this image is approximately the same size as the target prism 11 from which it comes.

Supposing that the centre of the screen is a point aligned with the optical axis O, the horizontal deviation **H** and the vertical deviation **V** of the reflected/returning light 12 can easily be calculated based upon the position of the image. By shifting the optical axis of the telescope by H in the horizontal direction and by V in the vertical direction, the optical axis of the telescope can be aligned with the target prism 11.

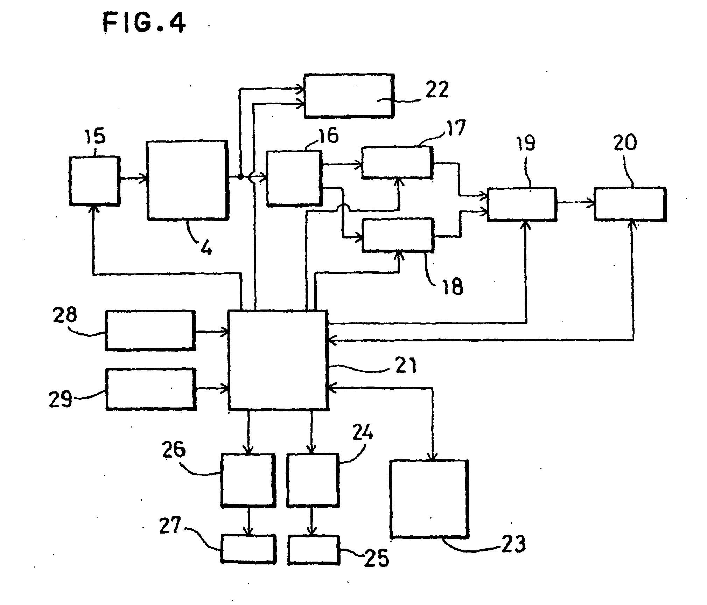

Next, a description will be given of the surveying controller, referring now to Figure 4.

At a given position along the optical axis O, there is an electronic shutter 15. Incident light coming from the objective lens 1 passes through the electronic shutter 15 and forms an image on the solid state image sensor 4. Connected to the solid state image sensor 4 there is an A/D converter 16 and a display unit 22. A first memory 17 and a second memory 18 are connected to the A/D converter 16, and a subtraction circuit 19 and a third memory 20 are serially connected to the first and second memories 17, 18.

A computing unit 21 is connected to the electronic shutter 15, the first memory 17, the second memory 18, the subtraction circuit 19, the third memory 20 and the display unit 22. To the computing unit 21 there is connected a distance measuring circuit 23, a vertical drive controller 24 and a horizontal drive controller 26. The vertical drive controller 24 is arranged to drive a vertical motor 25; the horizontal drive controller is arranged to drive a horizontal motor 27. There is also a vertical encoder 28 for measuring the vertical angle and a horizontal encoder 29 for measuring the horizontal angle. These are provided on the optical axis of the telescope, and signals from the vertical and horizontal encoders 28,29 are fed into the computing unit 21.

A description will now be given of the operation of the controller of Figure 4.

The distance measuring circuit 23 includes the emitter 6 and the light receiving element 8. Distance is calculated, as previously mentioned, from the phase difference between the outgoing (emitted) light and the incoming (returning) light. The results of the calculation are displayed on the display unit 22, after being processed by the computing unit 21.

Incident light coming from the objective lens 1 forms an image on the solid state image sensor 4, the sensor providing photoelectric conversion. The image signal from the sensor 4 is then converted into a digital signal by the A/D converter 16 and then by a synchronizing/timing signal from the computing unit 21 synchronized synchronized with the flashing of the emitter 6 in the distance measuring circuit 23, the image signal when the emitter is turned on is memorised in the first memory and the image signal when the imager is turned off is memorised in the second memory.

The subtraction circuit 19 then determines the difference between the two stored images, and this difference is sent to the third memory 20. The image signal 20 which is memorised in the third memory 20 corresponds to the image shown in Figure 2(B). Based upon this image data, the computing unit 21 calculates the horizontal deviation H and the vertical deviation **V** of the centre of the reflected/returning light 12 from the optical axis O.

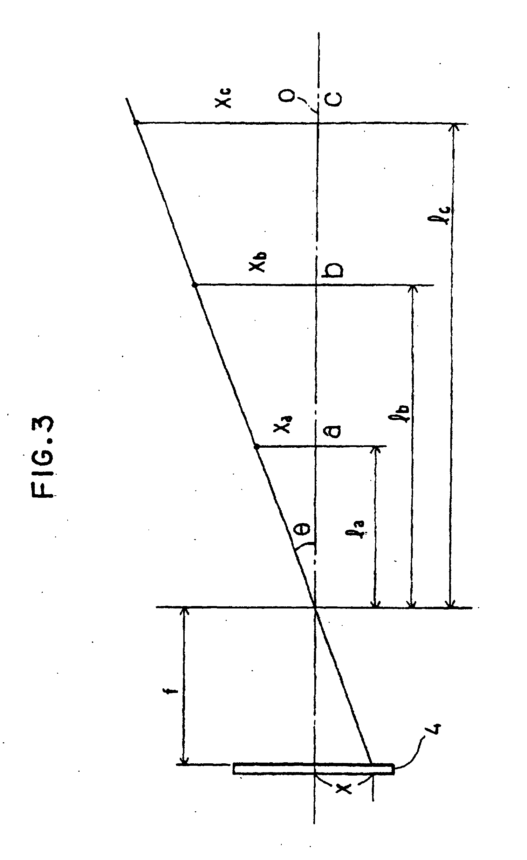

As shown in Figure 3, let it be supposed that the solid state image sensor 4 is located at the focal length f of the lens, and that. the angle of the reflected/returning light 12 entering the solid state image sensor is θ. The deviation **X** from the optical axis O on the sensor 4 is then f tan θ. By obtaining the deviation **X**, the rotational angle required for adjustment of the telescope is unambiguously determined. Accordingly, regardless of the distance 1(A), 1(B) or 1(C) to the target prism 11, the horizontal angle and the vertical angle necessary for correction of the telescope can be obtained by calculating the horizontal deviation **H** and the vertical deviation **V** on the image.

Once the horizontal deviation **H** and the vertical deviation **V** have been calculated, the computing unit 21 drives the vertical motor 25 and the horizontal motor 27 via the horizontal and vertical drive controllers 26, 24, so that the centre of the reflected/returning light 12 is aligned with the optical axis O.

The computing unit 21 can calculate the horizontal deviation **H** and the vertical deviation **V** as angular values.

As described above, the vertical angle of the telescope optical axis is input by the vertical encoder 28 to the computing unit 21, and the horizontal angle is input by the horizontal encoder 29 to the computing unit 21. Based on the horizontal and vertical angles, as well as the deviations **V** and **H**, the horizontal and vertical angles of the position of the centre of the target are obtained, and are displayed on the display unit 22.

Accordingly, based upon the horizontal angle, the vertical angle obtained in relation to the deviation and angle of the optical axis O, it is also possible to determine the horizontal angle and the vertical angle of the position of the centre of the target, even without aligning the optical axis O with the centre of the target.

As described above, the difference between the image when the emitter 6 is turned on, and the image when the emitter is turned off, is obtained while the surveying instrument main unit remains still, in order to obtain the image of the reflected/returning light from the target prism 11. It is, however, possible to obtain the image of the reflected/returning light from the target prism based on the difference between the image when the emitter is turned on and the image when the emitter is turned off when the surveying instrument main unit is rotating. This will now be described in more detail.

The speed at which the image moves with respect to the surveying instrument is calculated by the computing unit 21 based on pulse signals received from the vertical encoder 28 and the horizontal encoder 29. The speed of the electronic shutter 15 is controlled and driven, as determined by the computing unit 21, at a sufficiently high speed so that the image is not blurred.

The electronic shutter is synchronised with the emitter 6. As previously indicated, the image when the emitter is turned on is memorised within the first memory 17, and the image when the emitter is turned off is memorised within the second memory 18.

An exemplary image in this particular case is shown in Figure 2(C) to which reference should now be made. Here, it is supposed for the sake of example that the surveying instrument can be rotated only around a vertical axis.

In Figure 2(C), solid lines indicate the position where the surveying instrument is moved to align the target prism with the collimation axis of the telescope; at this point, the emitter 6 is emitting light. Now, when the emitter is turned off and the. image has been memorised, the surveying instrument is rotated into the position shown by the broken line. This image is then recorded. As will be seen in the Figure, there is a deviation **X** between the two images. Accordingly, if the difference between the two images is calculated, the image of the target prism 11 will also deviate by **X**; thus a differential image (the image when emitting minus the. image when not emitting) cannot be obtained.

This is dealt with by determining the deviation X between the two images, and then shifting one of the two images and overlapping it with the other so that the difference can then be calculated. By counting the number of pulses issued from the horizontal encoder 29, these being produced at a time difference Δ t, the deviation **X** between the image memorised in the first memory and the image memorised in the second memory can easily be obtained.

The procedure to be followed after one of the images has been shifted, and the images overlapped, is exactly the same as in the case where the surveying instrument has not been rotated. A further detailed description will not accordingly be given here.

Thus, the optical axis O and the centre of the target prism 11 can be aligned with one another without any manual operation needing to be made by the surveyor. The positioning of the optical axis O with the target prism 11 is carried out automatically with reference to the secondary picture of the solid state sensor 4. As a result, it is possible to perform positioning with high accuracy, regardless of the distance between the target prism 11 and the surveying instrument.

It is possible to align the optical axis O with the centre of the target prism 11 without manual intervention by the surveyor regardless of whether the surveying instrument is stationary, or whether it is rotating.

When the centre of the prism has been aligned with the optical axis O of the telescope, an LED incorporated in the surveying instrument may be arranged to operate. Alternatively, a message may be displayed on the display unit 22 to inform the surveyor of the alignment: of the centre of the prism with the optical axis O of the telescope.

If the positioning operation is to be performed intermittently or repeatedly, the telescope follows the target prism 11 even when the target prism 11 is moved by the surveyor. Thus, the target prism always falls within the visual field of the telescope, thereby extensively simplifying the operation.

In determining the horizontal and vertical angles of the centre of the target, no manual alignment is necessary before the measured value is displayed for the surveyor on the display unit 22. As a result, both working efficiency and measuring accuracy can be improved.

The optical axis O of the telescope is normally shown by means of a reticle line in the optical system of the telescope. In the present invention the optical axis is indicated by illuminating the reticle.

While an electronic shutter 15 is provided in the present embodiment, the shutter may be omitted if the images stored in the first memory 17 and in the second memory 18 by the computing unit 21 can be otherwise determined or limited in accordance with the flashing of the emitter 6. It is also possible to provide another emitter for target positioning, in addition to the emitter 6 previously mentioned; again, by flashing this emitter the difference between the on and off modes may be obtained.

The intensity difference between the surrounding scenery and the target prism image may be increased by making use of the electronic shutter in conjunction with an emitter of high radiation output, and also by reducing the time necessary to open the electronic shutter and synchronously turn on the emitter.

In the above embodiment, the first, second and third memories are separate; it is of course to be understood that instead a single memory could be used, having separate first, second and third storage area.

The telescope may be rotated around a vertical central shaft and/or a horizontal central shaft. Instead of using a decoder for angle detection, an angle detector using a differential transformer may be used.

## Claims

1. A survey instrument comprising a telescope mounted for rotation about a horizontal or vertical axis, or both, and alignable along an alignment axis with the centre of a target to be viewed, an emitter (6) for emitting a light signal towards the target, a sensor (4) positioned to receive emitted light reflected back to the telescope from the target, and a controller for calculating an angular displacement of the telescope relative to the alignment axis based on the position of the reflected light beam on the sensor, **characterised in that** the light signal emitted by the emitter (6) is an intermittent signal; the light sensor (4) is a solid state image sensor arranged to receive successive optical images from the telescope both when the emitter is on and when it is off, and operates to transmit successive and synchronised image signals to each of two memories (17,18) for respectively memorising the images received from the telescope by the image sensor (4) when the emitter is on and when it is off; and **in that** the controller comprises a computing unit (21) which calculates the angle of displacement of the telescope relative to the alignment axis based on the difference between the memorised images.

2. A surveying instrument according to Claim 1, wherein the computing unit (21) operates to obtain both a horizontal angle of deviation of the telescope from the alignment axis and a vertical angle of deviation.

3. A surveying instrument according to claim 2, including a display unit (22) for displaying the horizontal and vertical angles of displacement as determined by the computing unit (21).

4. A surveying instrument according to claim 3, including user-notification means arranged to alert a user of the instrument when the horizontal and vertical angles of the displacement have been obtained.

5. A surveying instrument according to any one of claims 1 or 4, wherein the telescope is rotatably supported independently about a vertical axis and a horizontal axis, a motor is provided to rotate the telescope with respect to the two axes and the controller being arranged to drive the motor to eliminate a measured deviation.

6. A surveying instrument according to claim 5, including user-notification means arranged to alert a user of the instrument when an optical axis of the telescope is aligned with the centre of the target.

7. A surveying instrument according to any one of claims 1 to 6, wherein an electronic shutter is provided, the shutter being arranged to control the time at which the image is received by the sensor (4).

## Patentansprüche

1. Vermessungsinstrument, mit einem um eine horizontale oder eine vertikale Achse oder um beide drehbar angeordneten Teleskop, das entlang einer Ausrichtungsachse mit dem Zentrum eines zu betrachtenden Zieles ausrichtbar ist, mit einem Emitter (6) zur Ausstrahlung eines Lichtsignals auf das Ziel, mit einem Sensor (4), der positioniert ist, das von dem Ziel reflektierte ausgestrahlte Licht zu empfangen, und mit einer Steuervorrichtung zur Berechnung einer Winkelverschiebung des Teleskopes relativ zur Ausrichtungsachse basierend auf der Position des reflektierten Lichtstrahles auf dem Sensor, **dadurch gekennzeichnet, daß** das von dem Emitter (6) ausgestrahlte Licht ein intermittierendes Signal ist, der Lichtsensor (4) ein Festkörperbildsensor ist, der zum Empfang aufeinanderfolgender optischer Bilder vom Teleskop sowohl bei an- als auch bei ausgeschaltetem Emitter ausgebildet ist und im Betrieb aufeinanderfolgende und synchronisierte Bildsignale zu jedem von zwei Speichern (17, 18) überträgt zur jeweiligen Speicherung der vom Teleskop durch den Bildsensor (4) erhaltenen Bilder, wenn der Emitter an- und wenn er ausgeschaltet ist, wobei die Steuervorrichtung eine Rechnereinrichtung (21) aufweist, die die Winkelverschiebung des Teleskopes relativ zur Ausrichtungsachse basierend auf der Differenz zwischen den gespeicherten Bildern errechnet.

2. Vermessungsinstrument nach Anspruch 1, **dadurch gekennzeichnet, daß** die Rechnereinrichtung (21) eine horizontale Winkelabweichung des Teleskops von der Ausrichtungsachse und eine vertikale Winkelabweichung ermittelnd arbeitet.

3. Vermessungsinstrument nach Anspruch 2 **dadurch gekennzeichnet, daß** es eine Anzeigeeinrichtung (22) für die Anzeige der von der Rechnereinrichtung (21) ermittelten horizontalen und der vertikalen Winkelabweichung aufweist.

4. Vermessungsinstrument nach Anspruch 3, **dadurch gekennzeichnet, daß** es Benutzerhinweiseinrichtungen aufweist, die zur Alarmierung des Benutzers des Instrumentes ausgebildet sind, wenn die horizontale und die vertikale Winkelabweichung erhalten worden ist.

5. Vermessungsinstrument nach einem der Ansprüche 1 oder 4, **dadurch gekennzeichnet, daß** das Teleskop drehbar um eine vertikale und eine horizontale Achse unabhängig voneinander gehalten ist, wobei ein Motor für die Drehung des Teleskopes in Bezug auf die beiden Achsen vorgesehen ist, und die Steuervorrichtung den Motor zur Eliminierung einer gemessenen Abweichung steuernd ausgebildet ist.

6. Vermessungsinstrument nach Anspruch 5, **dadurch gekennzeichnet, daß** es Benutzerhinweiseinrichtungen aufweist, die zur Alarmierung des Benutzers des Instrumentes ausgebildet sind, wenn eine optische Achse des Teleskopes mit dem Zentrum des Zieles ausgerichtet ist.

7. Vermessungsinstrument nach einem der Ansprüche 1 bis 6, **dadurch gekennzeichnet, daß** ein elektronischer Shutter vorgesehen ist, der zur Steuerung der Zeit ausgebildet ist, zu der das Bild von dem Sensor (4) empfangen wird.

## Revendications

1. Instrument topographique comprenant une lunette montée pour tourner autour d'un axe horizontal ou vertical, ou les deux, et alignable le long d'un axe sur le centre d'une cible à observer, un émetteur (6) pour émettre un signal lumineux vers la cible, un capteur (4) positionné pour recevoir la lumière émise réfléchie vers la lunette à partir de la cible, et un contrôleur pour calculer un déplacement angulaire de la lunette par rapport à l'axe d'alignement sur la base de la position du faisceau lumineux réfléchi sur le capteur, **caractérisé en ce que** le signal lumineux émis par l'émetteur (6) est un signal intermittent ; le capteur de lumière (4) est un capteur d'images à l'état solide disposé pour recevoir des images optiques successives à partir de la lunette à la fois quand l'émetteur est en service et quand il est hors service, et fonctionne pour transmettre des signaux d'images synchronisés et successifs à chacune de deux mémoires (17, 18) pour à chaque fois mémoriser les images reçues de la lunette par le capteur d'images (4) quand l'émetteur est en service et quand il est hors service ; et **en ce que** le contrôleur comprend une unité de calcul (21) qui calcule l'angle de déplacement de la lunette par rapport à l'axe d'alignement sur la base de la différence entre les images mémorisées.

2. Instrument topographique selon la revendication 1, dans lequel l'unité de calcul (21) fonctionne pour obtenir à la fois un angle horizontal de déviation de la lunette par rapport à l'axe d'alignement et un angle vertical de déviation.

3. Instrument topographique selon la revendication 2, comprenant une unité d'affichage (22) pour afficher les angles horizontal et vertical de déplacement comme déterminés par l'unité de calcul (21).

4. Instrument topographique selon la revendication 3, comprenant des moyens d'annonce à l'utilisateur disposés pour avertir un utilisateur de l'instrument lorsque les angles horizontal et vertical du déplacement ont été obtenus.

5. Instrument topographique selon l'une quelconque des revendications 1 ou 4, dans lequel la lunette est supportée indépendamment de façon à pouvoir tourner autour d'un axe vertical et d'un axe horizontal, un moteur est prévu pour faire tourner la lunette par rapport aux deux axes et le contrôleur étant disposé pour enclencher le moteur pour éliminer une déviation mesurée.

6. Instrument topographique selon la revendication 5, comprenant des moyens d'annonce à l'utilisateur disposés pour avertir un utilisateur de l'instrument lorsqu'un axe optique de la lunette est aligné sur le centre de la cible.

7. Instrument topographique selon l'une quelconque des revendications 1 à 6, dans lequel un obturateur électronique est prévu, l'obturateur étant disposé pour régler le moment où l'image est reçue par le capteur (4).
